# EUROPEAN PATENT SPECIFICATION

(11) **EP 3 272 553 B1**
(45) Date of publication and mention of the grant of the patent: **29.04.2020**
(21) Application number: 16768592.4
(22) Date of filing: 16.03.2016
(51) Int. Cl.: B60C 11/03, B60C 5/00

(54) **MOTORCYCLE TIRE**
MOTORRADREIFEN
PNEUMATIQUE POUR MOTOCYCLE

(30) Priority: 20.03.2015 JP 2015058788
(43) Date of publication of application: 24.01.2018
(73) Proprietor: Bridgestone Corporation, Tokyo 104-8340 (JP)
(72) Inventor: DAIRIKI, Takahiro, Tokyo 104-8340 (JP); ITOI, Dyta, Tokyo 104-8340 (JP)
(74) Representative: Oxley, Robin John George
(86) International application number: PCT/JP2016/058382
(87) International publication number: WO 2016/152689

(56) References cited:
- JP-A- 2012 513 930
- JP-A- 2013 082 453
- JP-A- 2013 159 208
- JP-A- 2013 180 664
- US-A1- 2011 253 276
- US-A1- 2011 259 491

## Description

### TECHNICAL FIELD

The present invention relates to a motorcycle tire (hereinafter, also simply referred to as "tire"). More particularly, the present invention relates to a motorcycle tire having an improved tread pattern.

### BACKGROUND ART

Because of the characteristic of two-wheeled vehicles to make turns by tilting the body, which is different from four-wheeled vehicles such as passenger cars and trucks, motorcycle tires have a shape in which the crown section has a smaller curvature and a rounder cross-section than four-wheeled vehicle tires. Therefore, depending on the position of the ground-contacting portion in a ground contact state, the slipping parts in the ground-contacting surface may be uneven particularly when a large driving force is applied, and this is likely to cause uneven wear in which specific parts are rapidly worn out. In such motorcycle tires, a variety of tread patterns are formed by adopting multiple combinations of the number and the shape of grooves arranged in the tire tread section so as to improve various tire performances, such as drainage performance in wet conditions and wear resistance.

For example, aiming to provide a motorcycle tire in which thermal degradation of the tread section can be inhibited while maintaining the turning performance and the serviceable life of the tire, Patent Document 1 discloses a motorcycle tire that comprises a tread section and has a designated rotation direction, the outer surface of which tread section is curved in a circular arc shape convex toward the tire radial direction outer side and the outer end of which tread section forms the maximum tire width, wherein inner inclined main grooves which are constituted by prescribed first and second inner inclined main grooves each extending toward the respective tread ends on each side of the tire equator are arranged in the tread section, the first and the second inclined main grooves are alternately arranged in the tire circumferential direction and each have a prescribed length in the tire circumferential direction, prescribed inclined narrow grooves of a prescribed groove width are arranged in the regions between the inner inclined main grooves that are adjacent in the tire circumferential direction on each side of the tire equator, and the ground-contact surface during straight forward movement has a land ratio of 85 to 95%. Attention is also drawn to the disclosures of US2011/259491, US2011/253276 and JP2013-082453.

### RELATED ART DOCUMENT

### PATENT DOCUMENT

Patent Document 1: Japanese Unexamined Patent Application Publication No. 2013-180664

### SUMMARY OF THE INVENTION

### PROBLEMS TO BE SOLVED BY THE INVENTION

Generally speaking, for improvement of the wear resistance of a tire, it is effective to increase the land portion of the tread section; however, the groove ratio in the tread section decreases as the land portion is increased. This makes it difficult to maintain the drainage performance, and it is thus extremely difficult to satisfy both wear resistance and drainage performance. These problems are not sufficiently examined also in Patent Document 1, and it is desired to achieve a further improvement in both wear resistance and drainage performance.

In view of the above, an object of the present invention is to provide a motorcycle tire whose wear resistance and drainage performance are improved by refining the tread pattern.

### MEANS FOR SOLVING THE PROBLEMS

The present inventors intensively studied to solve the above-described problems and consequently discovered that, by arranging inclined main grooves and shallow grooves having a smaller depth than the inclined main grooves in the tread section under prescribed conditions, the wear resistance and the drainage performance can be further improved and the problems can be solved as a result, thereby completing the present invention.

That is, the motorcycle tire of the present invention is a motorcycle tire as claimed in claim 1.

In the tire of the present invention, when, among the at least two inclined main grooves, the one which is arranged adjacent to the first inclined main groove on the tire rotation direction leading side is defined as a second inclined main groove, it is preferred that the center-side shallow groove extends between one end of the first inclined main groove and one end of the second inclined main groove. In the tire of the present invention, it is also preferred that the center-side shallow groove exists on the tire width direction inner side relative to the second inclined main groove. Further, in the tire of the present invention, it is preferred that the shoulder-side shallow groove is inclined in the same direction as the first and second inclined main grooves; and that the center-side shallow groove is also inclined in the same direction as the first and second inclined main grooves. The tire of the present invention is suitably used as a rear tire.

### EFFECTS OF THE INVENTION

According to the present invention, a motorcycle tire whose wear resistance and drainage performance are improved as compared to conventional motorcycle tires can be realized.

### BRIEF DESCRIPTION OF THE DRAWINGS

FIG. 1 is one example of a partial development view illustrating the tread section of a motorcycle tire according to one preferred embodiment of the present invention.
FIG. 2 is one example of a cross-sectional view taken along the width direction of a motorcycle tire according to one preferred embodiment of the present invention.

### MODE FOR CARRYING OUT THE INVENTION

The motorcycle tire of the present invention will now be described in detail referring to the drawings.

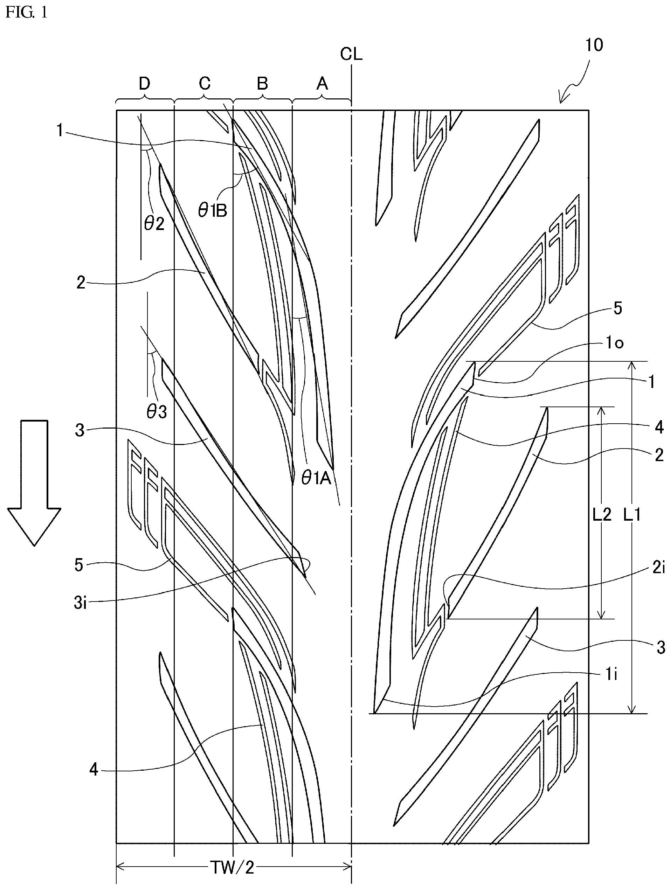

The motorcycle tire of the present invention comprises: a tread section; and side wall sections and bead sections that continuously extend on both sides of the tread section, and whose rotation direction when fitted to a motorcycle is designated, and the motorcycle tire of the present invention exerts its effects most prominently when used as a rear tire. FIG. 1 is one example of a partial development view illustrating the tread section of a motorcycle tire according to one preferred embodiment of the present invention, and the arrow drawn therein represents the rotation direction of the tire.

As illustrated in FIG. 1, in the tire of the present invention, at least two inclined main grooves (three inclined main grooves 1, 2 and 3 in the illustrated example) which are inclined with respect to the tire circumferential direction, and at least two shallow grooves 4 and 5 are arranged on the surface of a tread section 10. In the present invention, among the three inclined main grooves 1, 2 and 3, the one whose tire width direction inner end is closest to the tire equatorial plane CL is defined as "a first inclined main groove 1", and the other two inclined main grooves are defined as "a second inclined main groove 2" and "a third inclined main groove 3" sequentially from the side of the first inclined main groove 1 toward the leading side of the tire rotation direction.

In the tire of the present invention, the at least two shallow grooves comprise: a center-side shallow groove 4, which exists on the tire width direction outer side relative to the first inclined main groove 1 and at least in a central part; and a shoulder-side shallow groove 5, which exists on the tire width direction inner side relative to the first inclined main groove 1 and at least in a shoulder part. By arranging the shallow grooves 4 and 5, the drainage performance can be further improved. The shallow grooves are preferably arranged on the force input side of each block; however, when the shallow grooves are arranged on the force input side of the block in the central part, the rigidity is reduced and this leads to a reduction in wear resistance. Therefore, in the present invention, the shoulder-side shallow groove 5 is arranged on the tire width direction inner side relative to the first inclined main groove 1 in the shoulder part, that is, on the force input side of each block, and the center-side shallow groove 4 is arranged on the tire width direction outer side relative to the first inclined main groove 1 in the central part, that is, on the force output side of each block. This enables to improve the drainage performance without reducing the wear resistance. Further, by allowing the shallow grooves 4 and 5 to have a depth of 0.1 to 0.5 mm, the drainage performance can be favorably improved while maintaining the rigidity of the tread section.

In the present invention, the shallow grooves 4 and 5 refer to grooves having a depth of 10% or less with respect to the depth of the respective inclined main grooves.

In the present invention, as illustrated in FIG. 1, it is preferred that the center-side shallow groove 4 extends between one end of the first inclined main groove 1 and one end of the second inclined main groove 2. By arranging a shallow groove in this manner such that it extends between the ends of two inclined main grooves, since water is drained into the inclined main grooves along the shallow groove, water is more efficiently drained, which is preferred. More specifically, in the illustrated example, the center-side shallow groove 4 extends between a tire width direction outer end 1o of the first inclined main groove 1 and a tire width direction inner end 2i of the second inclined main groove 2.

It is also preferred that the center-side shallow groove 4 exists on the tire width direction inner side relative to the second inclined main groove 2. The reason for this is because, by making sure that the center-side shallow groove 4 is arranged inside the ground contact region when the tire is put in an upright position, the hydroplaning phenomenon during high-speed travel is effectively inhibited.

Further, it is preferred that the center-side shallow groove 4 and the shoulder-side shallow groove 5 are both inclined in the same direction as the first inclined main groove 1 and the second inclined main groove 2. By inclining the extending directions of the shallow grooves in the same direction as the first inclined main groove 1 and the second inclined main groove 2, drainage paths can be provided in the direction close to the normal line with respect to the outline of the ground contact surface, which is preferred from the standpoint of further improving the drainage performance.

In the tire of the present invention, the center-side shallow groove 4 and the shoulder-side shallow groove 5 play an auxiliary role of the first, second and third inclined main grooves 1, 2 and 3 during drainage; however, the shapes of the shallow grooves 4 and 5 are not particularly restricted. For example, in the illustrated example, the center-side shallow groove 4 and the shoulder-side shallow groove 5 are both not in communication with any of the inclined main grooves and are thus independent grooves terminated within a block; however, the center-side shallow groove 4 and/or the shoulder-side shallow groove 5 may be in communication with any one of the inclined main grooves.

In the illustrated example, the center-side shallow groove 4 is arranged inclined in the same direction as the first inclined main groove 1 and the second inclined main groove 2 such that it extends between the end 1o of the first inclined main groove 1 and the end 2i of the second inclined main groove 2, and the portion arranged in the vicinity of the end 1o of the first inclined main groove 1 consists of two substantially parallel grooves, while the portion in the vicinity of the end 2i of the second inclined main groove 2 consists of a single groove which extends in the direction that extends and connects with the end 2i of the second inclined main groove 2. In the illustrated example, the shoulder-side shallow groove 5 is arranged inclined in the same direction as the first inclined main groove 1 and the second inclined main groove 2 such that it extends from the vicinity of the tire width direction outer end 1o of the first inclined main groove 1 toward the shoulder part, and the portion arranged in the vicinity of the end 1o of the first inclined main groove 1 consists of three substantially parallel grooves which have a shape of extending in the direction that extends and connects with the end 1o of the first inclined main groove 1 and being closed in the shoulder part. Alternatively, for example, the center-side shallow groove 4 and the shoulder-side shallow groove 5 may each have a shape of a single straight line or a single curved line.

In the illustrated tire of the present invention, the first inclined main groove 1 is arranged in a linear or curved shape, and the second inclined main groove 2 and the third inclined main groove 3 are arranged in a linear shape and substantially parallel to each other. By forming these inclined main grooves in a linear or curved shape with no bending point, smooth drainage along the grooves is facilitated, so that the wet performance can be improved. In addition, by arranging the second inclined main groove 2 and the third inclined main groove 3 substantially parallel to each other, the land portion (block) defined by the grooves is allowed to have a substantially parallelogram shape and the block rigidity is thereby ensured, so that the tire behaves stably against input force.

In the illustrated tire of the present invention, when viewed from the tire width direction, the second inclined main groove 2 completely overlaps with the first inclined main groove 1. By arranging the second inclined main groove 2 at a position that overlaps with the first inclined main groove 1 which is arranged more closely to the tire equatorial plane CL, drainage by the second inclined main groove 2 and drainage by the first inclined main groove 1 can be synchronized, so that the drainage performance can be further improved.

Further, in the illustrated tire of the present invention, a tire width direction inner end 3i of the third inclined main groove 3 is positioned between two tire width direction inner ends 1i of the first inclined main grooves 1 that are adjacent in the tire circumferential direction. By arranging the tire width direction inner end 3i of the third inclined main groove 3 between two tire width direction inner ends 1i of the first inclined main grooves 1 that are adjacent in the tire circumferential direction, the inclined main grooves can be arranged evenly arranged in the tire circumferential direction, so that good drainage performance can be ensured while uniformizing the wear resistance throughout the tire circumferential direction. Particularly, the tire width direction inner end 3i of the third inclined main groove 3 is more preferably positioned at a substantially midpoint between two tire width direction inner ends 1i of the first inclined main grooves 1 that are adjacent in the tire circumferential direction, and this enables to uniformize the wear resistance and to ensure good drainage performance throughout the tire circumferential direction. The phrase "positioned at a substantially midpoint" used herein means that, when the distance in the tire circumferential direction between the tire width direction inner ends 1i of the first inclined main grooves 1 that are adjacent to each other is defined as 100%, the tire width direction inner end 3i of the third inclined main groove 3 is positioned in a range of midpoint ± 10%.

Therefore, in the tire of the present invention, by arranging three inclined main grooves of prescribed shapes in prescribed conditions, good drainage performance by the respective main grooves can be attained while ensuring the block rigidity and securing good wear resistance, and stable wear resistance and good drainage performance can be guaranteed throughout the tire circumferential direction, which are all preferred.

In the present invention, more specifically, as illustrated in FIG. 1, it is preferred that the inclined main grooves are each arranged as follows when four equal regions, which are obtained by dividing a tread half-width region TW/2 that spans from the tire equatorial plane CL to one end of the tread ground-contact region in the tire width direction, are defined as regions A, B, C, and D sequentially from the side of the tire equatorial plane. That is, by arranging the first inclined main groove 1 to span from the region A, which is the region closest to the tire equatorial plane, to the region B, the first inclined main groove 1 is allowed to contribute to the wet performance and the wear resistance. Further, by arranging the second inclined main groove 2 in the regions C and D, the second inclined main groove 2 is allowed to contribute to only the wet performance. Moreover, by arranging the third inclined main groove 3 in such a manner to extend from the region B to the regions C and D, the third inclined main groove 3 is allowed to contribute to the wet performance and the wear resistance. In the present invention, among the regions A, B, C, and D, the regions A and B correspond to the above-described central part, and the regions C and D correspond to the above-described shoulder part.

In the tire of the present invention, it is also preferred that the length L2 of the second inclined main groove 2 in the tire circumferential direction is not less than 50%, particularly 50 to 70%, with respect to the length L1 of the first inclined main groove 1 in the tire circumferential direction. By controlling the length L2 of the second inclined main groove 2 in the tire circumferential direction to be not less than 50% of the length L1 of the first inclined main groove 1 in the tire circumferential direction, the drainage performance by the second inclined main groove 2 can be sufficiently secured, and the wet performance can be further improved. The inclined main grooves may each have a depth of, for example, 4 to 7 mm. It is noted here that the depth of an inclined main groove means the depth at the deepest point of the inclined main groove.

Further, in the tire of the present invention, the first inclined main groove 1 has an inclination angle θ1A of preferably 0 to 20°, more preferably 5 to 15°, with respect to the tire circumferential direction in the region A, and an inclination angle θ1B of preferably 15 to 35°, more preferably 20 to 30°, with respect to the tire circumferential direction in the region B. The second inclined main groove 2 has an inclination angle θ2 of preferably 15 to 35°, more preferably 20 to 30°, with respect to the tire circumferential direction, and the third inclined main groove 3 has an inclination angle θ3 of preferably 50 to 70°, more preferably 55 to 65°, with respect to the tire circumferential direction. By setting the inclination angles of the inclined main grooves within the above-described respective ranges, the inclined main grooves are arranged in the direction close to the normal line with respect to the outline of the ground contact surface particularly in the regions C and the like, so that a driving force and a lateral force can be ensured, which is preferred.

In the present invention, the inclination angle of each inclined main groove with respect to the tire circumferential direction means an angle on the acute angle side of the angles that are formed by a straight line connecting the tire width direction ends of each inclined main groove with respect to the tire circumferential direction. As for the part of the first inclined main groove 1 in the boundary between the regions A and B, the inclination angle can be defined taking the midpoint of the groove width in the tire circumferential direction as one end in the tire width direction.

In the present invention, as illustrated in FIG. 1, from the standpoint of ensuring appropriate pattern rigidity in the vicinity of the tire equatorial plane and thereby improving the wear resistance, it is preferred that none of the inclined main grooves and shallow grooves is arranged on the tire equatorial plane.

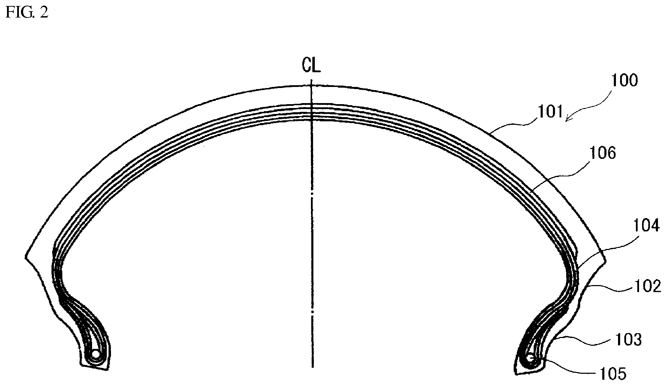

FIG. 2 is one example of a cross-sectional view taken along the width direction of a motorcycle tire according to one preferred embodiment of the present invention. As illustrated in FIG. 2, a tire 100 of the present invention comprises: a tread section 101; a pair of side wall sections 102, which continuously extend on both sides of the tread section 101; a pair of bead sections 103, which continuously extend from each of the pair of the side wall sections 102; and a carcass 104, which is composed of at least one carcass ply layer (two carcass ply layers in the illustrated example) reinforcing the above-described sections over the range between the bead sections 103. In the illustrated example, both ends of the carcass 104 are folded around a bead core 105 from the inside to the outside of the tire to be anchored; however, the ends of the carcass 104 may each be sandwiched and anchored by a bead wire.

Further, in the tire illustrated in FIG. 2, a belt layer 106 is arranged on the tire radial direction outer side of the carcass 104. The belt cord of the belt layer 106 is also not particularly restricted, and any known non-extensible high-elasticity cord can be used. For example, a cord made of an organic fiber such as an aromatic polyamide (aramid, e.g., trade name "Kevlar®" manufactured by DuPont), polyethylene naphthalate (PEN), polyethylene terephthalate (PET), rayon or nylon, or a material such as steel, glass fiber or carbon fiber, can be selected as appropriate. The belt layer 106 may be composed of two or more inclined belt layers which are arranged such that their cord directions intersect with each other between the layers, or may be composed of one or more spiral belt layers whose cord direction is substantially the same as the tire circumferential direction. The present invention is useful as a rear tire of a motorcycle and can also be applied to any of those tires having a radial structure or a bias structure.

### EXAMPLES

The present invention will now be described in more detail by way of examples thereof.

### <Example 1>

A motorcycle tire having a tread pattern of the type illustrated in FIG. 1 was produced at a size of 190/55ZR17. As illustrated, in this tire, a first inclined main groove 1 had a curved shape, and a second inclined main groove 2 and a third inclined main groove 3 had a linear shape and were arranged substantially parallel to each other. Further, in this tire, a center-side shallow groove 4 existing on the tire width direction outer side relative to the first inclined main groove 1 and at least in the central part and a shoulder-side shallow groove 5 existing on the tire width direction inner side relative to the first inclined main groove 1 and at least in the shoulder part were arranged as shallow grooves.

In this tire, the center-side shallow groove 4 and the shoulder-side shallow groove 5 were both inclined in the same direction as the first inclined main groove 1 and the second inclined main groove 2, and the center-side shallow groove 4 existed on the tire width direction inner side relative to the second inclined main groove 2, extending between one end of the first inclined main groove 1 and one end of the second inclined main groove 2. These shallow grooves 4 and 5 both had a depth of 0.3 mm, and the inclined main grooves all had a depth of 5.9 mm.

### <Example 2>

The test tire of Example 2 was produced in the same manner as in Example 1, except that the center-side shallow groove 4 was not arranged in such a manner to extend between one end of the first inclined main groove 1 and one end of the second inclined main groove 2.

### <Example 3>

The test tire of Example 3 was produced in the same manner as in Example 1, except that the center-side shallow groove 4 was arranged on the tire width direction outer side relative to the second inclined main groove 2.

### <Example 4>

The test tire of Example 4 was produced in the same manner as in Example 1, except that the shoulder-side shallow groove 5 was arranged inclined in the opposite direction of the first inclined main groove 1 and the second inclined main groove 2.

### <Example 5>

The test tire of Example 5 was produced in the same manner as in Example 1, except that the center-side shallow groove 4 was arranged inclined in the opposite direction of the first inclined main groove 1 and the second inclined main groove 2.

### <Comparative Example 1>

The test tire of Comparative Example 1 was produced in the same manner as in Example 1, except that no shallow groove was arranged.

### <Comparative Example 2>

The test tire of Comparative Example 2 was produced in the same manner as in Example 1, except that only the center-side shallow groove 4 existing on the tire width direction outer side relative to the first inclined main groove 1 and at least in the central part was arranged as a shallow groove.

### <Comparative Example 3>

The test tire of Comparative Example 3 was produced in the same manner as in Example 1, except that only the shoulder-side shallow groove 5 existing on the tire width direction inner side relative to the first inclined main groove 1 and at least in the shoulder part was arranged as a shallow groove.

The thus obtained test tires were each assembled to a wheel having a rim size of 6.0 × 17 inches, inflated to an inner pressure of 290 kPa and then fitted to a 1,000-cc motorcycle as the rear tire. As the front tire, a conventional tire was fitted. The front tire had a size of 120/70ZR17, a rim size of 3.5 × 17 inches and an inner pressure of 250 kPa. This motorcycle was driven on a test track, and the drainage performance of the rear tire on wet road and the tire wear resistance were evaluated by the following methods.

### <Wear Resistance>

After the completion of the driving test performed by a test rider, the wear amount of each tire was measured using a depth gauge and compared. The results thereof are shown as index values where a value of 100 represents the wear amount of the tire of Comparative Example 1. A larger value indicates superior wear resistance.

### <Drainage Performance>

The strength of the gripping force of each tire on wet road and the change in the gripping strength in response to tilting of the tire were evaluated by the test rider based on the feeling. The results thereof are shown as index values where a value of 100 represents the tire of Comparative Example 1. A larger value indicates superior drainage performance.

**[Table 1]**

| | Presence or absence of center-side shallow groove | Presence or absence of shoulder -side shallow groove | Position of center-side shallow groove^{*1} | Position of center-side shallow groove relative to second inclined main groove | Inclination direction of shoulder-side shallow groove with respect to first and second inclined main grooves | Inclination direction of center-side shallow groove with respect to first and second inclined main grooves | Wear resistance (index) | Drainage performance (index) |
|---|---|---|---|---|---|---|---|---|
| Example 1 | present | present | between ends | tire width direction inner side | same | same | 100 | 110 |
| Example 2 | present | present | not between ends | tire width direction inner side | same | same | 100 | 105 |
| Example 3 | present | present | between ends | tire width direction outer side | same | same | 100 | 103 |
| Example 4 | present | present | between ends | tire width direction inner side | opposite | same | 100 | 103 |
| Example 5 | present | present | between ends | tire width direction inner side | same | opposite | 100 | 103 |
| Comparative Example 1 | absent | present | between ends | tire width direction inner side | same | same | 100 | 100 |
| Comparative Example 2 | present | absent | between ends | tire width direction inner side | same | same | 90 | 105 |
| Comparative Example 3 | absent | present | between ends | tire width direction inner side | same | same | 100 | 95 |

| | | | | | | | | |
|---|---|---|---|---|---|---|---|---|
| ^{*1)} This indicates whether or not the center-side shallow groove was arranged in such a manner to extend between one end of the first inclined main groove and one end of the second inclined main groove. | | | | | | | | |

From the results shown in Table above, it was confirmed that the tire of the present invention has excellent wear resistance and excellent drainage performance.

### DESCRIPTION OF SYMBOLS

- 1:: first inclined main groove
- 1i:: tire width direction inner end of first inclined main groove
- 1o:: tire width direction outer end of first inclined main groove
- 2:: second inclined main groove
- 2i:: tire width direction inner end of second inclined main groove
- 3:: third inclined main groove
- 3i:: tire width direction inner end of third inclined main groove
- 4:: center-side shallow groove
- 5:: shoulder-side shallow groove
- 10:: tread section
- 100:: tire
- 101:: tread section
- 102:: side wall section
- 103:: bead section
- 104:: carcass
- 105:: bead core
- 106:: belt layer

## Claims

1. A motorcycle tire (100) which comprises: a tread section (10, 101); and side wall sections and bead sections that continuously extend on both sides of said tread section (10, 101), and whose rotation direction when fitted to a motorcycle is designated, wherein
at least two inclined main grooves (1, 2, 3) that are inclined with respect to the tire circumferential direction and at least two shallow grooves (4, 5) are arranged on the surface of said tread section (10, 101);
when, among said at least two inclined main grooves (1, 2, 3), the one whose tire width direction inner end is closest to the tire equatorial plane is defined as a first inclined main groove (1), said at least two shallow grooves (4, 5) comprise: a center-side shallow groove (4) which exists on the tire width direction outer side relative to said first inclined main groove (1) and at least in a central part; and a shoulder-side shallow groove (5) which exists on the tire width direction inner side relative to said first inclined main groove (1) and at least in a shoulder part;
when four equal regions, which are obtained by dividing a tread half-width region (TW/2) that spans from the tire equatorial plane (CL) to one end of the tread ground-contact region in the tire width direction, are defined as regions A, B, C, and D sequentially from the side of the tire equatorial plane (CL), the regions A and B correspond to the central part, and the regions C and D correspond to the shoulder part;
**characterised in that**,
the center-side shallow groove (4) and the shoulder-side shallow groove (5) are grooves having a depth of 10% or less with respect to the depth of the respective inclined main grooves (1, 2, 3), the depth of the respective inclined main grooves (1, 2, 3) being the depth at the deepest point of the inclined main groove (1, 2, 3); and
among the at least two inclined main grooves (1, 2, 3), the one which is arranged adjacent to the first inclined main groove (1) on the tire rotation direction leading side is defined as a second inclined main groove (2), and, when viewed from the tire width direction, the second inclined main groove (2) completely overlaps with the first inclined main groove (1).

2. The motorcycle tire (100) according to claim 1, wherein said center-side shallow groove (4) extends between one end of said first inclined main groove (1) and one end of said second inclined main groove (2).

3. The motorcycle tire (100) according to claim 2, wherein said center-side shallow groove (4) exists on the tire width direction inner side relative to said second inclined main groove (2).

4. The motorcycle tire (100) according to claim 2, wherein said shoulder-side shallow groove (5) is inclined in the same direction as said first inclined main groove (1) and said second inclined main groove (2).

5. The motorcycle tire (100) according to claim 2, wherein said center-side shallow groove (4) is inclined in the same direction as said first inclined main groove (1) and said second inclined main groove (2).

6. The motorcycle tire (100) according to claim 1, wherein:
the center-side shallow groove (4) is arranged inclined in the same direction as the first inclined main groove (1) and the second inclined main groove (2) such that it extends between the tire width direction outer end (1o) of the first inclined main groove (1) and the tire width direction inner end (2i) of the second inclined main groove (2);
in the center-side shallow groove (4), the portion arranged in the vicinity of the tire width direction outer end (1o) of the first inclined main groove (1) consists of two substantially parallel grooves; and
in the center-side shallow groove (4), the portion in the vicinity of the tire width direction inner end (2i) of the second inclined main groove (2) consists of a single groove which extends in the direction that extends and connects with the tire width direction inner end (2i) of the second inclined main groove (2).

7. The motorcycle tire (100) according to claim 1, wherein the at least two inclined main grooves (1, 2, 3) are each formed in a linear or curved shape with no bending point.

8. The motorcycle tire (100) according to claim 1, wherein the at least two inclined main grooves (1, 2, 3) include a third inclined main groove (3), and the second inclined main groove (2) and the third inclined main groove (3) are defined sequentially from the side of the first inclined main groove (1) toward the leading side of the tire rotation direction, and the second inclined main groove (2) and the third inclined main groove (3) are arranged in a linear shape and substantially parallel to each other.

9. The motorcycle tire (100) according to claim 1, wherein the at least two inclined main grooves (1, 2, 3) include a third inclined main groove (3) and another first inclined main groove (1), the first inclined main grooves (1) being adjacent in the tire circumferential direction, and the tire width direction inner end (3i) of the third inclined main groove (3) is positioned at a substantially midpoint between two tire width direction inner ends (1i) of the first inclined main grooves (1) that are adjacent in the tire circumferential direction, and the phrase "positioned at a substantially midpoint" means that, when the distance in the tire circumferential direction between the tire width direction inner ends (1i) of the first inclined main grooves (1) that are adjacent to each other is defined as 100%, the tire width direction inner end (3i) of the third inclined main groove (3) is positioned in a range of midpoint ± 10%.

10. The motorcycle tire (100) according to claim 1, wherein the length (L2) of the second inclined main groove (2) in the tire circumferential direction is 50 to 70% with respect to the length (L1) of the first inclined main groove (1) in the tire circumferential direction.

11. The motorcycle tire (100) according to claim 1, wherein the at least two inclined main grooves (1, 2, 3) each have a depth of 4 to 7 mm.

12. The motorcycle tire (100) according to claim 1, wherein the at least two inclined main grooves (1, 2, 3) include a third inclined main groove (3), and the first inclined main groove (1) has an inclination angle (θ1A) of 5 to 15°, with respect to the tire circumferential direction in the region A, and an inclination angle (θ1B) of 20 to 30°, with respect to the tire circumferential direction in the region B, and the second inclined main groove (2) has an inclination angle (θ2) of 20 to 30°, with respect to the tire circumferential direction, and the third inclined main groove (3) has an inclination angle (θ3) of 55 to 65°, with respect to the tire circumferential direction.

13. The motorcycle tire (100) according to claim 1, wherein none of the inclined main grooves (1, 2, 3) and shallow grooves (4, 5) is arranged on the tire equatorial plane (CL).

14. Use of the motorcycle tire (100) according to claim 1 as a rear tire.

## Patentansprüche

1. Motorradreifen (100), der Folgendes umfasst: eine Laufflächensektion (10, 101) und Seitenwandsektionen und Wulstsektionen, die sich durchgehend auf beiden Seiten der Laufflächensektion (10, 101) erstrecken, und dessen Drehungsrichtung, wenn er an einem Motorrad montiert ist, ausgewiesen ist, wobei
mindestens zwei geneigte Hauptrillen (1, 2, 3), die in Bezug auf die Reifenumfangsrichtung geneigt sind, und mindestens zwei flache Rillen (4, 5) auf der Oberfläche der Laufflächensektion (10, 101) angeordnet sind;
wenn, unter den mindestens zwei geneigten Hauptrillen (1, 2, 3), die eine, deren in Reifenbreitenrichtung inneres Ende der Reifenäquatorialebene am nächsten ist, als eine erste geneigte Hauptrille (1) definiert ist, die zwei flachen Rillen (4, 5) Folgendes umfassen: eine mittenseitige flache Rille (4), die auf der im Verhältnis zu der ersten geneigten Hauptrille (1) in Reifenbreitenrichtung äußeren Seite und mindestens in einem mittleren Teil vorhanden ist; und eine schulterseitige flache Rille (5), die auf der im Verhältnis zu der ersten geneigten Hauptrille (1) in Reifenbreitenrichtung inneren Seite und mindestens in einem Schulterteil vorhanden ist;
wenn vier gleiche Bereiche, die durch Teilen eines Bereichs mit halber Laufflächenbreite (TW/2), der sich in der Reifenbreitenrichtung von der Reifenäquatorialebene (CL) bis zu einem Ende des Laufflächen-Bodenberührungsbereichs spannt, erhalten werden, nacheinander von der Seite der Reifenäquatorialebene (CL) als Bereiche A, B, C und D definiert sind, die Bereiche A und B dem mittleren Teil entsprechen und die Bereiche C und D dem Schulterteil entsprechen;
**dadurch gekennzeichnet, dass**
die mittenseitige flache Rille (4) und die schulterseitige flache Rille (5) Rillen sind, die eine Tiefe von 10 % oder weniger in Bezug auf die Tiefe der jeweiligen geneigten Hauptrillen (1, 2, 3) aufweisen, wobei die Tiefe der jeweiligen geneigten Hauptrillen (1, 2, 3) die Tiefe an dem tiefsten Punkt der geneigten Hauptrillen (1, 2, 3) ist; und
unter den mindestens zwei geneigten Hauptrillen (1, 2, 3) die eine, die benachbart zu der ersten geneigten Hauptrille (1) auf der in Reifendrehungsrichtung vorderen Seite angeordnet ist, als eine zweite geneigte Hauptrille (2) definiert ist und, wenn sie aus der Reifenbreitenrichtung betrachtet wird, sich die zweite geneigte Hauptrille (2) vollständig mit der ersten geneigten Hauptrille (1) überlappt.

2. Motorradreifen (100) nach Anspruch 1, wobei sich die mittenseitige flache Rille (4) zwischen einem Ende der ersten geneigten Hauptrille (1) und einem Ende der zweiten geneigten Hauptrille (2) erstreckt.

3. Motorradreifen (100) nach Anspruch 2, wobei die mittenseitige flache Rille (4) auf der im Verhältnis zu der zweiten geneigten Hauptrille (2) in Reifenbreitenrichtung inneren Seite vorhanden ist.

4. Motorradreifen (100) nach Anspruch 2, wobei die schulterseitige flache Rille (5) in der gleichen Richtung geneigt ist wie die erste geneigte Hauptrille (1) und die zweite geneigte Hauptrille (2).

5. Motorradreifen (100) nach Anspruch 2, wobei die mittenseitige flache Rille (4) in der gleichen Richtung geneigt ist wie die erste geneigte Hauptrille (1) und die zweite geneigte Hauptrille (2).

6. Motorradreifen (100) nach Anspruch 1, wobei:
die mittenseitige flache Rille (4) derart in der gleichen Richtung geneigt angeordnet ist wie die erste geneigte Hauptrille (1) und die zweite geneigte Hauptrille (2), dass sie sich zwischen dem in Reifenbreitenrichtung äußeren Ende (1o) der ersten geneigten Hauptrille (1) und dem in Reifenbreitenrichtung inneren Ende (2i) der zweiten geneigten Hauptrille (2) erstreckt,
in der mittenseitigen flachen Rille (4) der Abschnitt, der in der Nachbarschaft des in Reifenbreitenrichtung äußeren Endes (1o) der ersten geneigten Hauptrille (1) angeordnet ist, aus zwei im Wesentlichen parallelen Rillen besteht; und
in der mittenseitigen flachen Rille (4) der Abschnitt in der Nachbarschaft des in Reifenbreitenrichtung inneren Endes (2i) der zweiten geneigten Hauptrille (2) aus einer einzigen Rille besteht, die sich in der Richtung erstreckt, die sich mit dem in Reifenbreitenrichtung inneren Ende (2i) der zweiten geneigten Hauptrille (2) erstreckt und verbindet.

7. Motorradreifen (100) nach Anspruch 1, wobei die mindestens zwei geneigten Hauptrillen (1, 2, 3) jeweils in einer linearen oder gekrümmten Gestalt ohne Biegungspunkt geformt sind.

8. Motorradreifen (100) nach Anspruch 1, wobei die mindestens zwei geneigten Hauptrillen (1, 2, 3) eine dritte geneigte Hauptrille (3) einschließen und die zweite geneigte Hauptrille (2) und die dritte geneigte Hauptrille (3) nacheinander von der Seite der ersten geneigten Hauptrille (1) zu der in Reifendrehungsrichtung vorderen Seite definiert sind und die zweite geneigte Hauptrille (2) und die dritte geneigte Hauptrille (3) in einer linearen Form und im Wesentlichen parallel zueinander angeordnet sind.

9. Motorradreifen (100) nach Anspruch 1, wobei die mindestens zwei geneigten Hauptrillen (1, 2, 3) eine dritte geneigte Hauptrille (3) und eine weitere erste geneigte Hauptrille (1) einschließen, wobei die ersten geneigten Hauptrillen (1) einander in der Reifenumfangsrichtung benachbart sind und das in Reifenbreitenrichtung innere Ende (3i) der dritten geneigten Hauptrille (3) an einem im Wesentlichen mittleren Punkt zwischen zwei in Reifenbreitenrichtung inneren Enden (1i) der ersten geneigten Hauptrillen (1), die einander in der Reifenumfangsrichtung benachbart sind, angeordnet sind und die Wendung "an einem im Wesentlichen mittleren Punkt angeordnet" bedeutet, dass, wenn die Entfernung in der Reifenumfangsrichtung zwischen den in Reifenbreitenrichtung inneren Enden (1i) der ersten geneigten Hauptrillen (1), die einander benachbart sind, als 100 % definiert ist, das in Reifenbreitenrichtung innere Ende (3i) der dritten geneigten Hauptrille (3) in einem Bereich von Mittelpunkt ± 10 % angeordnet ist.

10. Motorradreifen (100) nach Anspruch 1, wobei eine Länge (L2) der zweiten geneigten Hauptrille (2) in der Reifenumfangsrichtung 50 bis 70 % in Bezug auf die Länge (L1) der ersten geneigten Hauptrille (1) in der Reifenumfangsrichtung beträgt.

11. Motorradreifen (100) nach Anspruch 1, wobei die mindestens zwei geneigten Hauptrillen (1, 2, 3) jeweils eine Tiefe von 4 bis 7 mm aufweisen.

12. Motorradreifen (100) nach Anspruch 1, wobei die mindestens zwei geneigten Hauptrillen (1, 2, 3) eine dritte geneigte Hauptrille (3) einschließen und die erste geneigte Hauptrille (1) einen Neigungswinkel (θ1A) von 5 bis 15°, in Bezug auf die Reifenumfangsrichtung in dem Bereich A, und einen Neigungswinkel (θ1B) von 20 bis 30°, in Bezug auf die Reifenumfangsrichtung in dem Bereich B, aufweist und die zweite geneigte Hauptrille (2) einen Neigungswinkel (θ2) von 20 bis 30°, in Bezug auf die Reifenumfangsrichtung, aufweist und die dritte geneigte Hauptrille (3) einen Neigungswinkel (θ3) von 55 bis 65°, in Bezug auf die Reifenumfangsrichtung, aufweist.

13. Motorradreifen (100) nach Anspruch 1, wobei keine der geneigten Hauptrillen (1, 2, 3) und der zwei flachen Rillen (4, 5) auf der Reifenäquatorialebene (CL) angeordnet ist.

14. Verwendung des Motorradreifens (100) nach Anspruch 1 als ein Hinterradreifen.

## Revendications

1. Bandage pneumatique pour motocycle (100), comprenant : une section de bande de roulement (10, 101), et des sections de flanc et des sections de talon s'étendant en continu sur les deux côtés de ladite section de bande de roulement (10, 101), et dont la direction de rotation, lors de son ajustement sur un motocycle, est spécifiée ; dans lequel
au moins deux rainures principales inclinées (1, 2, 3), inclinées par rapport à la direction circonférentielle du bandage pneumatique, et au moins deux rainures peu profondes (4, 5) sont agencées sur la surface de ladite section de bande de roulement (10, 101) ;
lorsque, parmi lesdites au moins deux rainures inclinées (1, 2, 3), celle dont l'extrémité interne, dans la direction de la largeur du bandage pneumatique, est la plus proche du plan équatorial du bandage pneumatique, est définie comme une première rainure principale inclinée (1), lesdites deux rainures peu profondes (4, 5) comprennent : une rainure peu profonde du côté central (4), située sur le côté externe, dans la direction de la largeur du bandage pneumatique, par rapport à ladite première rainure principale inclinée (1), et au moins dans une partie centrale ; et une rainure peu profonde du côté de l'épaulement (5) située sur le côté interne, dans la direction de la largeur du bandage pneumatique, par rapport à ladite première rainure principale inclinée (1), et au moins dans une partie d'épaulement ;
lorsque quatre régions égales, établies en divisant une région à demi-largeur de la bande de roulement (TW/2) s'étendant du plan équatorial du bandage pneumatique (CL) vers une extrémité de la région de contact au sol de la bande de roulement, dans la direction de la largeur du bandage pneumatique, sont définies comme régions A, B, C et D, de manière séquentielle, à partir du côté du plan équatorial du bandage pneumatique (CL), les régions A et B correspondent à la partie centrale, les régions C et D correspondant à la partie d'épaulement ;
**caractérisé en ce que**,
la rainure peu profonde du côté central (4) et la rainure peu profonde du côté d'épaulement (5) sont des rainures ayant une profondeur représentant 10% ou moins de la profondeur des rainures principales inclinées respectives (1, 2, 3), la profondeur des rainures principales inclinées respectives (1, 2, 3) correspondant à la profondeur au niveau du point le plus profond des rainures principales inclinées (1, 2, 3) ; et
parmi les au moins deux rainures principales inclinées (1, 2, 3), celle agencée près de la première rainure principale inclinée (1), sur le côté avant, dans la direction de rotation du bandage pneumatique, est définie comme une deuxième rainure principale inclinée (2), et, vue dans la direction de la largeur du bandage pneumatique, la deuxième rainure principale inclinée (2) chevauche complètement la première rainure principale inclinée (1).

2. Bandage pneumatique pour motocycle (100) selon la revendication 1, dans lequel ladite rainure peu profonde du côté central (4) s'étend entre une extrémité de ladite première rainure principale inclinée (1) et une extrémité de ladite deuxième rainure principale inclinée (2).

3. Bandage pneumatique pour motocycle (100) selon la revendication 2, dans lequel ladite rainure peu profonde du côté central (4) est située sur le côté interne, dans la direction de la largeur du bandage pneumatique, par rapport à ladite deuxième rainure principale inclinée (2).

4. Bandage pneumatique pour motocycle (100) selon la revendication 2, dans lequel ladite rainure peu profonde du côté de l'épaulement (5) est inclinée dans la même direction que ladite première rainure principale inclinée (1) et que ladite deuxième rainure principale inclinée (2).

5. Bandage pneumatique pour motocycle (100) selon la revendication 2, dans lequel ladite rainure peu profonde du côté central (4) est inclinée dans la même direction que ladite première rainure principale inclinée (1) et que ladite deuxième rainure principale inclinée (2).

6. Bandage pneumatique pour motocycle (100) selon la revendication 1, dans lequel :
la rainure peu profonde du côté central (4) est agencée de sorte à être inclinée dans la même direction que la première rainure principale inclinée (1) et que la deuxième rainure principale inclinée (2), de sorte à s'étendre entre l'extrémité externe (1o), dans la direction de la largeur du bandage pneumatique, de la première rainure principale inclinée (1) et l'extrémité interne (2i), dans la direction de la largeur du bandage pneumatique, de la deuxième rainure principale inclinée (2) ;
dans la rainure peu profonde du côté central (4), la partie agencée au voisinage de l'extrémité externe (1o), dans la direction de la largeur du bandage pneumatique, de la première rainure principale inclinée (1) est constituée par deux rainures sensiblement parallèles ; et
dans la rainure peu profonde du côté central (4), la partie au voisinage de l'extrémité interne (2i), dans la direction de la largeur du bandage pneumatique, de la deuxième rainure principale inclinée (2), est constituée par une seule rainure s'étendant dans la direction s'étendant avec et connectée à l'extrémité interne (2i), dans la direction de la largeur du bandage pneumatique, de la deuxième rainure principale inclinée (2).

7. Bandage pneumatique pour motocycle (100) selon la revendication 1, dans lequel au moins deux rainures principales inclinées (1, 2, 3) sont formées chacune dans une forme linéaire ou courbée, sans point de flexion.

8. Bandage pneumatique pour motocycle (100) selon la revendication 1, dans lequel les au moins deux rainures principales inclinées (1, 2, 3) incluent une troisième rainure principale inclinée (3), la deuxième rainure principale inclinée (2) et la troisième rainure principale inclinée (3) étant définies séquentiellement, du côté de la première rainure principale inclinée (1) vers le côté avant de la direction de rotation du bandage pneumatique, la deuxième rainure principale inclinée (2) et la troisième rainure principale inclinée (3) étant agencées dans une forme linéaire et étant sensiblement parallèles l'une à l'autre.

9. Bandage pneumatique pour motocycle (100) selon la revendication 1, dans lequel les au moins deux rainures principales inclinées (1, 2, 3) incluent une troisième rainure principale inclinée (3) et une autre première rainure principale inclinée (1), les premières rainures principales inclinées (1) étant adjacentes dans une direction circonférentielle du bandage pneumatique, et l'extrémité interne (3i), dans la direction de la largeur du bandage pneumatique, de la troisième rainure principale inclinée (3) étant positionnée au niveau d'un point sensiblement médian entre deux extrémités internes (1i), dans la direction de la largeur du bandage pneumatique, des premières rainures principales inclinées (1) adjacentes dans la direction circonférentielle du bandage pneumatique, la phrase « positionnées au niveau d'un point sensiblement médian » signifiant que, lorsque la distance, dans la direction circonférentielle du bandage pneumatique, entre les extrémités internes (1i), dans la direction de la largeur du bandage pneumatique, des premières rainures principales inclinées (1) adjacentes l'une à l'autre, est définie comme représentant 100%, l'extrémité interne (3i), dans la direction de la largeur du bandage pneumatique, de la troisième rainure principale inclinée (3) est positionnée dans un intervalle de point médian représentant ± 10%.

10. Bandage pneumatique pour motocycle (100) selon la revendication 1, dans lequel la longueur (L2) de la deuxième rainure principale inclinée (2), dans la direction circonférentielle du bandage pneumatique, représente 50 à 70% de la longueur (L1) de la première rainure principale inclinée (1), dans la direction circonférentielle du bandage pneumatique.

11. Bandage pneumatique pour motocycle (100) selon la revendication 1, dans lequel les au moins deux rainures principales inclinées (1, 2, 3) ont chacune une profondeur comprise entre 4 et 7 mm.

12. Bandage pneumatique pour motocycle (100) selon la revendication 1, dans lequel les au moins deux rainures principales inclinées (1, 2, 3) incluent une troisième rainure principale inclinée (3), la première rainure principale inclinée (1) formant un angle d'inclinaison (θ1A) compris entre 5 et 15° par rapport à la direction circonférentielle du bandage pneumatique, dans la région A, et un angle d'inclinaison (θ1B) compris entre 20 et 30°, par rapport à la direction circonférentielle du bandage pneumatique, dans la région B, la deuxième rainure principale inclinée (2) formant un angle d'inclinaison (θ2) compris entre 20 et 30°, par rapport à la direction circonférentielle du bandage pneumatique, la troisième rainure principale inclinée (3) formant un angle d'inclinaison (θ3) compris entre 55 et 65°, par rapport à la direction circonférentielle du bandage pneumatique.

13. Bandage pneumatique pour motocycle (100) selon la revendication 1, dans lequel aucune des rainures principales inclinées (1, 2, 3) et des rainures peu profondes (4, 5) n'est agencée sur le plan équatorial du bandage pneumatique (CL).

14. Utilisation du bandage pneumatique pour motocycle (100) selon la revendication 1 comme bandage pneumatique arrière.
